# DEMANDE DE BREVET EUROPEEN

(11) **EP 2 261 865 A1**
(43) Date de publication de la demande: **15.12.2010**
(21) Numéro de dépôt: 10305615.6
(22) Date de dépôt: 09.06.2010
(51) Int. Cl.: G07C 9/00, G06Q 10/00

(54) **Procédé de surveillance dynamique de transport de marchandises et dispositif de stockage desdites marchandises**

(30) Priorité: 10.06.2009 FR 0953847
(71) Demandeur: Quasard Investissements, 92100 Boulogne Billancourt (FR)
(72) Inventeur: Rey, Jean-Christophe, 24000, PERIGUEUX (FR)
(74) Mandataire: Fantin, Laurent

(57) **Abrégé**

L'objet de l'invention est un procédé de surveillance de chargement de marchandises dans un dispositif de stockage ou contenant pourvu d'une porte d'accès munie de moyens de contrôle d'accès, **caractérisé en ce qu**'il comprend les étapes suivantes : déverrouillage (12) de la porte du contenant par un code de déverrouillage fourni à un opérateur (01) par un centre de commande, chargement (14) de marchandises, et verrouillage (16) de la porte du contenant par un code de verrouillage fourni à un client (A) par le centre de commande, ledit client (A) étant distinct de l'opérateur (O1).

## Description

La présente invention concerne un procédé de surveillance du transport de marchandises, ainsi qu'un dispositif de stockage desdites marchandises.

Par transport, on entend l'une ou l'autre des opérations de chargement des marchandises, de déchargement des marchandises et d'acheminement depuis l'emplacement de chargement jusqu'à l'emplacement de déchargement.

Le transport de marchandises s'effectue généralement dans un container installé dans un porteur tel qu'un camion ou un navire, qui est chargé en un lieu donné et déchargé après acheminement à sa destination.

Malheureusement, il n'est pas rare que des vols surviennent au cours de l'une de ces opérations d'acheminement, chargement et déchargement, et que le stock de marchandises soit partiellement ou complètement subtilisé ou encore détérioré, voire que le porteur lui-même disparaisse.

Pour la suite de la description, on entend par "contenant" tout dispositif dans lequel les marchandises sont stockées et qui est éventuellement destiné à être installé dans un porteur en vue du transport des marchandises.

Pour éviter le vol ou la dégradation de marchandises lors du transport, il est connu que le porteur ou le contenant lui-même soit muni d'un module de localisation géographique, de type GPS, de sorte que la position du porteur ou du contenant peut être suivie à distance. Il est ainsi possible de déterminer le moment où le contenant des marchandises s'écarte du chemin prévu et de le retrouver grâce à sa balise GPS, ce qui empêche le vol du porteur.

Néanmoins, un tel dispositif est insuffisant pour prévenir le vol des marchandises stockées dans le contenant ou pour analyser et déterminer les causes ou les responsables de la détérioration.

Il est également connu un dispositif de verrouillage de la porte d'accès du contenant qui signale toute tentative d'effraction du dispositif.

Cependant, un tel dispositif s'avère complètement inefficace lorsque le vol est perpétré par une personne ayant capté le code de déverrouillage de la porte.

Le but de l'invention est de remédier notamment à ces inconvénients en proposant un procédé de surveillance de marchandises ainsi qu'un dispositif de stockage des marchandises qui assurent un transport sécurisé des marchandises depuis leur chargement dans le dispositif de stockage jusqu'à leur déchargement hors du dispositif de stockage, au lieu de livraison.

A cet effet, l'invention a pour objet un procédé de surveillance de chargement de marchandises dans un dispositif de stockage ou contenant pourvu d'une porte d'accès munie de moyens de contrôle d'accès de la porte, **caractérisé en ce qu**'il comprend les étapes suivantes :
- déverrouillage de la porte du contenant par un code de déverrouillage fourni à un opérateur par un centre de commande,
- chargement de marchandises, et
- verrouillage de la porte du contenant par un code de verrouillage fourni à un client par le centre de commande, ledit client étant distinct de l'opérateur.

L'invention a également pour objet un procédé de déchargement d'un contenant chargé de marchandises comme décrit précédemment, **caractérisé en ce qu**'il comprend les étapes suivantes :
- déverrouillage de la porte du contenant par un code de déverrouillage fourni à un client par le centre de commande,
- déchargement de marchandises, et
- verrouillage de la porte du contenant par un code de verrouillage fourni à un opérateur par le centre de commande, ledit opérateur étant distinct du client.

L'invention concerne également un dispositif de stockage de marchandises, ou contenant, muni d'une porte d'accès, **caractérisé en ce qu**'il comprend une unité d'interaction avec un centre de commande à distance, ladite unité d'interaction étant apte à communiquer des informations au centre à distance et à recevoir des ordres du centre à distance. Ces communications peuvent être effectuées en mode crypté.

L'invention concerne également un système de surveillance de transport de marchandises, **caractérisé en ce qu**'il comprend un dispositif de stockage tel que décrit précédemment et un centre de commande à distance apte à piloter l'unité interactive du dispositif de stockage et à recevoir des informations de ladite unité interactive.

D'autres caractéristiques et avantages ressortiront de la description qui va suivre de l'invention, description donnée à titre d'exemple uniquement, en regard des dessins annexés sur lesquels :
- la figure 1 est un ordinogramme illustrant un procédé de surveillance de chargement de marchandises conforme à la présente invention,
- la figure 2 est un ordinogramme illustrant un procédé de surveillance de déchargement de marchandises conforme à la présente invention,
- la figure 3 est un ordinogramme illustrant un procédé d'arrêt conforme à la présente invention,
- la figure 4 est une vue en coupe longitudinale d'un dispositif de stockage conforme à la présente invention,
- la figure 5 est une vue en coupe longitudinale d'un dispositif de stockage selon une variante, et
- la figure 6 est un schéma bloc de modules assurant la sécurité du dispositif de stockage selon la présente invention.

L'invention va être décrite dans le cadre du transport de marchandises commandé par un client expéditeur A en vue de l'approvisionnement d'un client destinataire B, le terme transport englobant les opérations de chargement, déchargement, et acheminement depuis l'emplacement de chargement jusqu'à l'emplacement de déchargement. Le chargement est effectué sous la responsabilité d'un premier opérateur *O*1 et le déchargement sous la responsabilité d'un second opérateur *O*2. Il est bien entendu que les premier et second opérateurs *O*1 et *O*2 peuvent être la même personne, comme par exemple le conducteur d'un camion dans lequel sont transportées les marchandises, et qui alors est responsable du chargement, de l'acheminement et du déchargement. Chacun des opérateurs *O*1 et *O*2 est distinct des clients expéditeur et destinataire A et B, tandis qu'un même client peut être à la fois l'expéditeur A et le destinataire B.

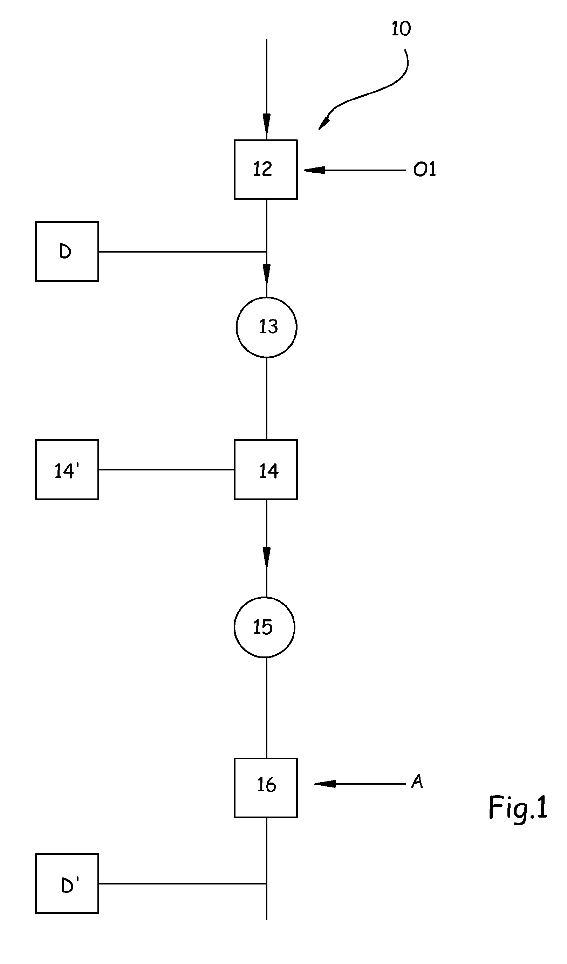

Sur la figure 1, on a représenté en 10 un ordinogramme illustrant un procédé de surveillance de chargement de marchandises dans un dispositif de stockage et comprenant une porte d'accès munie de moyens de contrôle d'accès de la porte, ces moyens étant activés ou désactivés par un code, comme il sera précisé en détail ultérieurement.

Ce procédé de surveillance de chargement comprend une étape de déverrouillage 12 de la porte du contenant par un code de déverrouillage fourni par un centre de commande à distance à l'opérateur *O*1 responsable du chargement des marchandises dans le contenant, une étape 14 de chargement de marchandises éventuellement effectuée par l'opérateur *O*1 ou sous sa responsabilité, ainsi qu'une étape 16 de verrouillage de la porte du contenant par un code de verrouillage fourni au client expéditeur A par le centre de commande. Les étapes 12 et 16 assurent qu'un double accès, celui du client expéditeur A et celui de l'opérateur *O*1, est une condition nécessaire au procédé de surveillance de chargement 10.

Selon un mode de réalisation, le procédé de surveillance de chargement 10 comprend une étape 13 de mesure et de contrôle du poids préalable à l'étape de chargement 14 et une étape 15 de mesure et de contrôle du poids postérieure à l'étape de chargement 14. Ces étapes 13 et 15 permettent de mesurer le poids initial des marchandises chargées, l'étape 13 de mesure du poids préalable au chargement 14 du contenant vide étant une étape de tarage.

Selon un mode de réalisation, le procédé de surveillance de chargement 10 comprend une étape de vidéosurveillance 14' au moins concomitante à l'étape de chargement. Cette étape permet de contrôler au moins l'étape de chargement 14 et de s'assurer ainsi qu'il s'agit bien d'une opération de chargement, que les marchandises chargées sont effectivement celles qui doivent l'être et que le chargement est accompli de façon honnête et complète par l'opérateur *O*1. Selon un mode de réalisation, le procédé de surveillance de chargement 10 comprend préalablement à l'étape de déverrouillage, une étape de contrôle de la localisation géographique du contenant et de la date par le centre de commande, ainsi qu'une étape d'activation du code de déverrouillage et du code de verrouillage par ledit centre de commande si la localisation géographique et la date concordent respectivement avec une localisation géographique prédéterminée et une date prédéterminée. Ces étapes supplémentaires garantissent que le chargement a bien lieu à l'emplacement et à la date souhaités par le client expéditeur. On entend par date un jour, une succession de jours, une plage horaire.

Selon un mode de réalisation, le procédé de surveillance de chargement comprend une étape de désactivation D du code de déverrouillage immédiatement postérieure à l'étape de déverrouillage 12 de la porte et une étape de désactivation D' du code de verrouillage immédiatement postérieure à l'étape de verrouillage 16 de la porte. Ces étapes D et D' de désactivation assurent que personne, et en particulier ni l'opérateur *O*1 ni le client expéditeur A, ne puisse rouvrir la porte d'accès du contenant à l'issue du chargement de celui-ci.

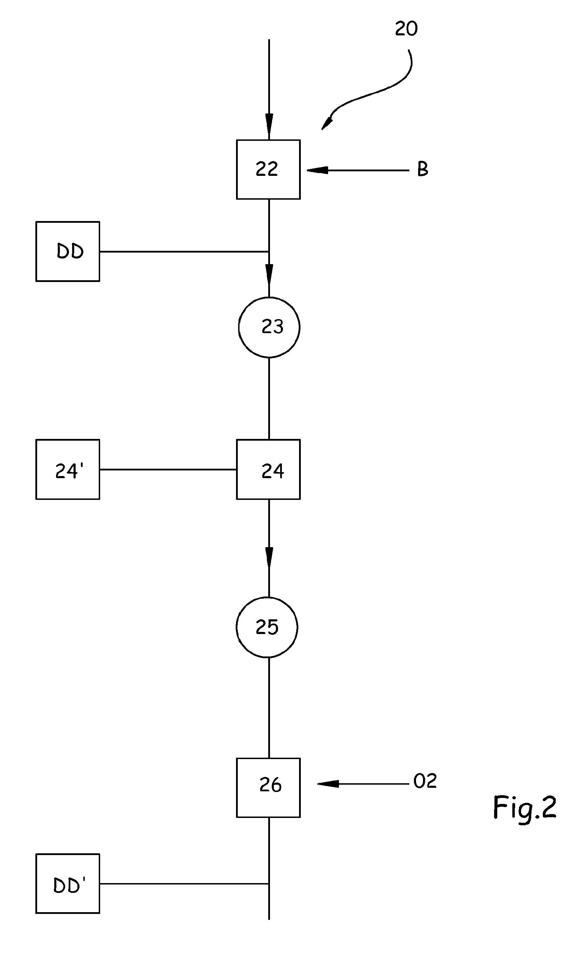

Sur la figure 2, un ordinogramme 20 illustre un procédé de surveillance de déchargement des marchandises qui ont été au préalable chargées dans le contenant comme décrit précédemment.

Ce procédé de surveillance de déchargement 20 comprend une étape de déverrouillage 22 de la porte du contenant par un code de déverrouillage fourni au client destinataire B par le centre de commande, une étape 24 de déchargement de marchandises effectuée par un opérateur *O*2 ou sous sa responsabilité, ainsi qu'une étape 26 de verrouillage de la porte du contenant par un code de verrouillage fourni à l'opérateur *O*2 par le centre de commande. On peut définir ce verrouillage comme étant un scellé électronique.

De même que pour le procédé de surveillance de chargement, les étapes 22 et 26 assurent qu'un double accès, celui du client destinataire B et celui de l'opérateur O2, est une condition nécessaire au procédé de surveillance de déchargement 20.

Selon un mode de réalisation, le procédé de surveillance de déchargement 20 comprend une étape 23 de mesure et de contrôle du poids préalable à l'étape de déchargement 24 et une étape 25 de mesure et de contrôle du poids postérieure à l'étape de déchargement 24. Ces étapes 23 et 25 permettent d'une part de contrôler que le poids des marchandises n'a pas changé depuis le chargement, et d'autre part que c'est la quantité souhaitée de marchandises qui est déchargée du contenant.

Selon un mode de réalisation, le procédé de surveillance de déchargement 20 comprend une étape de vidéosurveillance 24' au moins concomitante à l'étape de déchargement 24, assurant la sécurisation du déchargement 24 dans les mêmes conditions que le procédé de surveillance du chargement 10 des marchandises. Selon un mode de réalisation, le procédé de surveillance de déchargement comprend préalablement à l'étape de déverrouillage, une étape de contrôle de la localisation géographique du contenant et de la date par le centre de commande, ainsi qu'une étape d'activation du code de déverrouillage et du code de verrouillage par ledit centre de commande si la localisation géographique et la date concordent respectivement avec une localisation géographique prédéterminée et une date prédéterminée.

Selon un mode de réalisation, le procédé de surveillance de déchargement comprend une étape de désactivation DD du code de déverrouillage immédiatement postérieure à l'étape de déverrouillage 22 de la porte et une étape de désactivation DD' du code de verrouillage immédiatement postérieure à l'étape de verrouillage 26 de la porte 42. De manière analogue au procédé de surveillance de chargement, les étapes de désactivation DD et DD' assurent que personne, et en particulier ni l'opérateur *O*2 ni le client destinataire B, ne puisse rouvrir la porte d'accès du contenant à l'issue du déchargement de celui-ci.

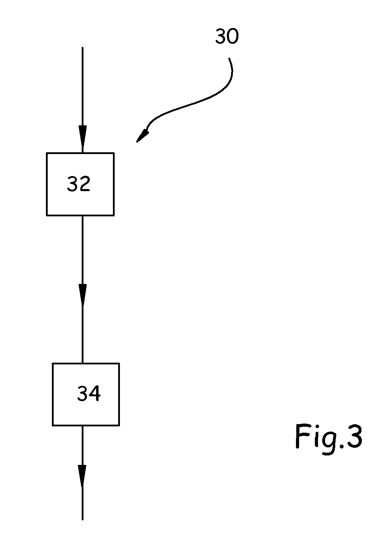

Sur la figure 3, un ordinogramme 30 illustre un procédé de surveillance d'un arrêt ayant lieu au cours de l'acheminement des marchandises après leur chargement et avant leur déchargement, par exemple du fait que le conducteur ait besoin de se reposer. Ce procédé consiste en une étape de suivi du contrôle du poids des marchandises stockées dans le contenant par mesures 32 du poids à une fréquence donnée, et en une étape d'activation 34 d'un module anti-intrusion que comprend le contenant, comme il sera précisé ultérieurement. Les mesures du poids des marchandises sont prises par exemple toutes les 30 s.

Selon un mode de réalisation, ce procédé de surveillance d'acheminement comprend une étape de localisation géographique du contenant, par exemple par l'utilisation d'une balise GPS.

On note que les procédés de surveillance de chargement et de déchargement décrits s'appliquent à un chargement d'un contenant vide et au déchargement complet du contenant rempli, mais également à des chargements et déchargements partiels, le transport pouvant comprendre plusieurs chargements et déchargements successifs. On note également que les procédés peuvent être destinés uniquement au stockage des marchandises, ou être complétés par l'acheminement du dispositif de stockage d'un emplacement de chargement à un emplacement de déchargement.

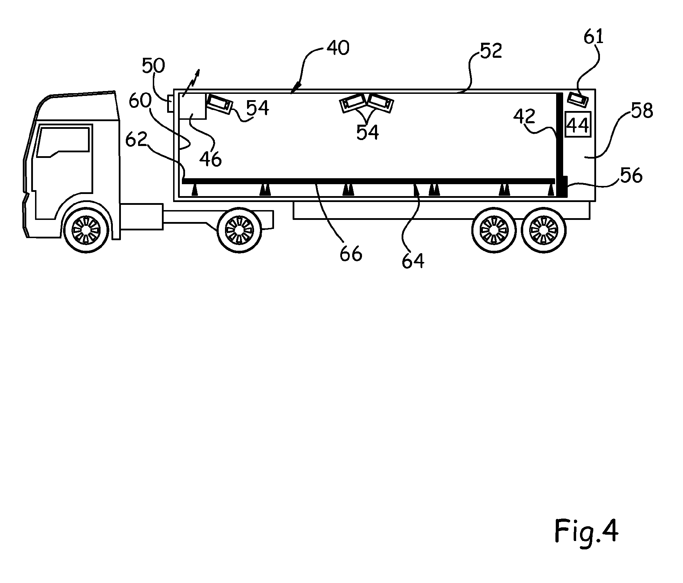

Sur la figure 4, on a représenté un dispositif de stockage ou contenant 40 dans lequel les marchandises sont destinées à être chargées et éventuellement acheminées, et duquel les marchandises sont destinées à être déchargées. Comme expliqué précédemment, le contenant 40 est pourvu d'une porte d'accès 42 munie de moyens de contrôle d'accès 44 et des moyens de commande ou codes desdits moyens de contrôle 44, lesdits codes étant fournis ou contrôlés par un centre de commande à distance.

La porte est avantageusement pourvue d'un volet roulant blindé muni d'un verrou à pêne comprenant un piston électrique connu de l'homme du métier.

Les moyens de contrôle d'accès 44 sont de tout type adapté comme par exemple un digicode, un lecteur de codes à barres, ou un module d'identification biométrique. Leurs codes sont adaptés au type de moyens de contrôle d'accès 44. Pour un digicode, le code est une série numérique ou alphanumérique que l'on entre sur un clavier du digicode ; pour un code barre, le code est une succession de barres ; et pour un module d'identification biométrique, le code est l'empreinte de doigt, un iris, un visage ou encore une voix.

Les moyens de contrôle d'accès 44 déverrouillent puis verrouillent successivement la porte 42 par un code de déverrouillage fourni à l'opérateur de chargement *O*1 et un code de verrouillage fourni au client expéditeur A au cours d'un procédé de surveillance de chargement 10 des marchandises dans le contenant 40 tel que décrit précédemment. De même, au cours d'un procédé de surveillance de déchargement 20 des marchandises hors du contenant 40 tel que décrit précédemment, les moyens de contrôle d'accès 44 déverrouillent puis verrouillent successivement la porte 42 par un code de déverrouillage fourni au client destinataire B et un code de verrouillage fourni à l'opérateur de déchargement *O*2.

Le fournisseur de codes aux clients A et B et aux opérateurs *O*1 et *O*2 ou le contrôleur des codes est un centre de commande à distance, qui communique notamment avec une unité d'interaction ou interactive 46 installée dans le contenant 40 et apte à communiquer des informations au centre à distance et à recevoir des ordres du centre à distance.

Le contenant 40 comprend également des moyens de sécurisation 48 aptes à occuper un premier état activé et un second état désactivé, et à détecter une anomalie dans l'état activé, et des moyens d'activation et de désactivation des moyens de sécurisation 48.

Les moyens de sécurisation 48 sont de tout type adapté. En particulier, les moyens de sécurisation comprennent au moins un module de localisation géographique 50 du contenant 40 et/ou un module anti-intrusion 52 et/ou un module de détection de présence 54 et/ou un module de détection 56 de l'état ouvert ou fermé de la porte d'accès 42.

Le module de localisation géographique 50 est pourvu par exemple d'une balise GPS.

Le module anti-intrusion 52 comprend un capteur sismique de détection de toute tentative d'effraction du contenant 40 notamment par perçage, découpage, ou défonçage.

Le module de détection de présence 54 est pourvu d'un capteur infrarouge permettant de détecter un mouvement dans le contenant de façon connue de l'homme du métier.

Le module 56 de détection de l'état ouvert ou fermé de la porte d'accès 42 comprend un capteur magnétique à lame souple connu de l'homme du métier.

Selon un mode de réalisation représenté à la figure 4, le contenant 40 est disposé dans une caisse d'un porteur, tel qu'un camion, et est muni d'un sas d'entrée 58 conduisant à une unité de stockage 60 destinée à contenir les marchandises.

Le sas d'entrée 58 comprend un système de vidéosurveillance 61 connecté à l'unité interactive 46 et qui est au moins activé pendant les étapes de chargement 14 et de déchargement 24.

L'unité de stockage 60 comprend avantageusement un double fond 62 dans lequel est inséré un module de mesure 64 du poids des marchandises stockées dans le contenant et comprenant un système de pesage 66.

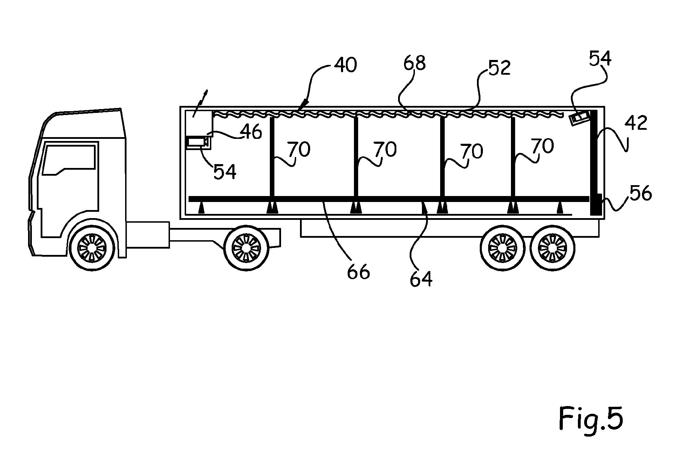

Selon une variante représentée à la figure 5, le contenant 40 comprend des moyens de destruction des marchandises 68 qui peuvent être avantageusement déclenchés en cas de détection d'une anomalie grave, assurant ainsi que les marchandises ne puissent pas être volées. Le contenant 40 est avantageusement muni de cloisons amovibles sécurisées 70 permettant un transport de plusieurs types de marchandises ou destinées à différents clients.

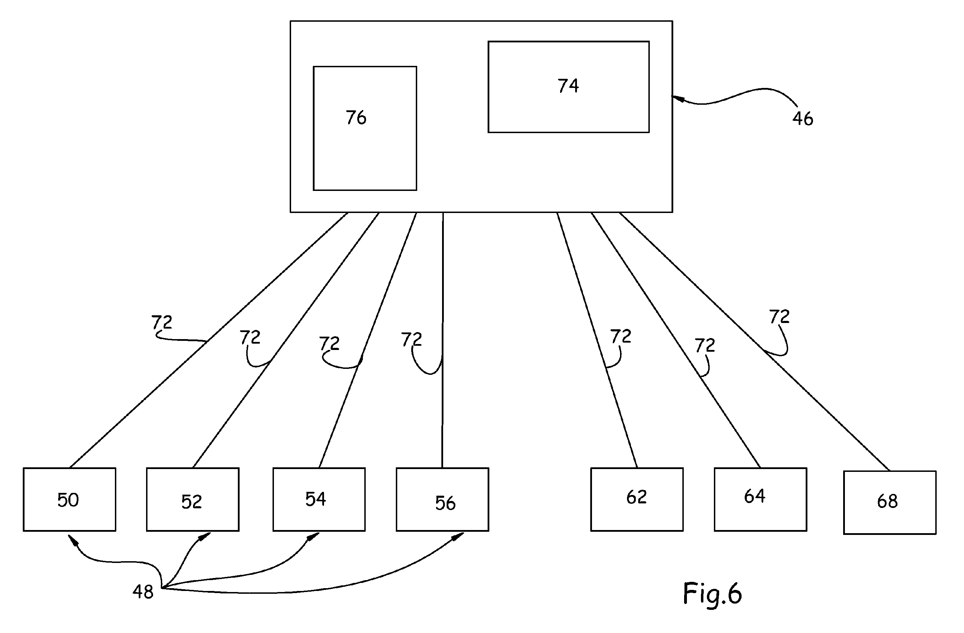

Comme représenté à la figure 6, le contenant 40 comprend des moyens de connexion 72 des moyens de sécurisation 48, du module de mesure du poids 64, du système de vidéosurveillance 61 et du module de destruction des marchandises 68 à l'unité interactive 46 qui les pilote et peut être elle-même commandée par le centre de commande à distance. De même, les moyens d'activation ou de désactivation des moyens de sécurisation 48 sont connectés à l'unité interactive 46 qui les pilote.

En cas de détection d'une anomalie, par exemple lorsque le capteur sismique du détecteur anti-intrusion 52 détecte des vibrations de perçage, ou lorsque le capteur magnétique du module 56 de l'état de la porte 42 indique que la porte 42 est ouverte alors qu'elle devrait être fermée, ou encore quand le poids mesuré n'est pas conforme, l'unité interactive 46 envoie un signal d'alerte au centre de commande à distance qui réagit en conséquence.

Ainsi, le centre à distance peut suivre en continu les informations envoyées par l'unité interactive, mais peut également contrôler les différents capteurs, en les activant ou en les bloquant. En d'autres termes, le centre à distance n'a pas qu'un rôle passif de suivi mais est également apte à faire évoluer l'état des capteurs au cours du transport des marchandises.

Selon un mode de réalisation, l'unité interactive 46 comprend un module de communication 74 avec le centre à distance apte à coopérer avec au moins un réseau de télécommunications. Avantageusement, le module de communication fonctionne avec au moins deux types de réseau de télécommunications, tels que satellite et GPRs par exemple, ce qui assure une continuité permanente de la couverture du réseau et ainsi une communication ininterrompue entre l'unité interactive et le centre à distance. Le module de communication comprend avantageusement des moyens de communication directe entre le centre de commande et l'opérateur par exemple sous forme numérique, visuelle ou sonore, tels qu'un terminal informatique personnel ou PDA.

Selon un mode de réalisation, le contenant 40 comprend des moyens autonomes d'alimentation des moyens de sécurisation 48 et du module de mesure du poids 64 et des moyens de connexion desdits moyens d'alimentation à l'unité interactive, de sorte que le centre à distance suive l'état des moyens d'alimentation.

Selon un mode de réalisation, l'unité interactive 46 comprend un système 76 d'acquisition de données et de stockage permettant l'enregistrement des informations issues des différents capteurs.

La présente invention concerne également un système de surveillance de transport de marchandises, **caractérisé en ce qu**'il comprend un dispositif de stockage 40 tel que celui décrit et un centre de commande à distance apte à piloter l'unité interactive du dispositif de stockage et à recevoir des informations de ladite unité interactive.

Ainsi les procédés de surveillance et le dispositif de stockage décrits assurent que soient sécurisés le chargement, stockage, déchargement et éventuellement acheminement des marchandises par des étapes de verrouillage et déverrouillage de la porte d'accès du contenant par reconnaissance successive de deux personnes autorisées distinctes, le client et l'opérateur, et par un contenant comprenant de multiples moyens de sécurisation ainsi qu'un module de mesure du poids connectés à une unité interactive elle-même communiquant avec un centre de commande à distance. Ce centre à distance joue à la fois un rôle de surveillance et un rôle de pilotage de l'unité interactive.

## Revendications

1. Procédé de surveillance de marchandises lors d'une phase de chargement dans un dispositif de stockage ou contenant pourvu d'une porte d'accès munie de moyens de contrôle d'accès de la porte, **caractérisé en ce qu'**il comprend les étapes suivantes :
- déverrouillage (12) de la porte du contenant par un code de déverrouillage fourni à un opérateur (O1) par un centre de commande,
- chargement (14) de marchandises, et
- verrouillage (16) de la porte du contenant par un code de verrouillage fourni à un client (A) par le centre de commande, ledit client (A) étant distinct de l'opérateur (O1).

2. Procédé de surveillance de marchandises lors d'une phase de chargement selon la revendication 1, **caractérisé en ce qu'**il comprend une étape (13) de mesure et de contrôle du poids préalable à l'étape de chargement (14) et une étape (15) de mesure et de contrôle du poids postérieure à l'étape de chargement (14).

3. Procédé de surveillance de marchandises lors d'une phase de chargement selon l'une des revendications 1 ou 2, **caractérisé en ce qu'**il comprend une étape (14') de vidéosurveillance au moins concomitante à l'étape de chargement (14).

4. Procédé de surveillance de marchandises lors d'une phase de chargement selon l'une quelconque des revendications précédentes, **caractérisé en ce qu'**il comprend préalablement à l'étape de déverrouillage, une étape de contrôle de la localisation géographique du contenant et de la date par le centre de commande, ainsi qu'une étape d'activation du code de déverrouillage et du code de verrouillage par ledit centre de commande si la localisation géographique et la date concordent respectivement avec une localisation géographique prédéterminée et une date prédéterminée.

5. Procédé de surveillance de marchandises lors d'une phase de chargement selon l'une quelconque des revendications précédentes, **caractérisé en ce qu'**il comprend une étape de désactivation (D) du code de déverrouillage immédiatement postérieure à l'étape de déverrouillage (12) de la porte et une étape de désactivation (D') du code de verrouillage immédiatement postérieure à l'étape de verrouillage (16) de la porte.

6. Procédé de surveillance de marchandises lors d'une phase de déchargement d'un contenant chargé de marchandises conformément au procédé selon l'une des revendications précédentes, **caractérisé en ce qu'**il comprend les étapes suivantes :
- déverrouillage (22) de la porte du contenant par un code de déverrouillage fourni à un client (B) par le centre de commande,
- déchargement (24) de marchandises, et
- verrouillage (26) de la porte du contenant par un code de verrouillage fourni à un opérateur (O2) par le centre de commande, ledit opérateur étant distinct du client (B).

7. Procédé de surveillance de marchandises lors d'une phase de déchargement selon la revendication précédente, **caractérisé en ce qu'**il comprend une étape (23) de mesure et de contrôle du poids préalable à l'étape de déchargement (24) et une étape (25) de mesure et de contrôle du poids postérieure à l'étape de déchargement (24).

8. Procédé de surveillance de marchandises lors d'une phase de déchargement selon l'une des revendications 6 ou 7, **caractérisé en ce qu'**il comprend une étape de vidéosurveillance (24') au moins concomitante à l'étape de déchargement (24).

9. Procédé de surveillance de marchandises lors d'une phase de déchargement selon l'une quelconque des revendications 6 à 8, **caractérisé en ce qu'**il comprend une étape préalablement à l'étape de déverrouillage, une étape de contrôle de la localisation géographique du contenant et de la date par le centre de commande, ainsi qu'une étape d'activation du code de déverrouillage et du code de verrouillage par ledit centre de commande si la localisation géographique et la date concordent respectivement avec une localisation géographique prédéterminée et une date prédéterminée.

10. Procédé de surveillance de marchandises lors d'une phase d'arrêt au cours de l'acheminement du contenant chargé conformément au procédé selon l'une des revendications 1 à 5 ou chargé et déchargé conformément au procédé selon l'une des revendications 6 à 8, **caractérisé en ce qu'**il comprend les étapes suivantes :
- suivi (32) par le centre à distance du contrôle du poids des marchandises stockées dans le contenant par mesures du poids à une fréquence donnée, et
- activation (34) d'un module anti-intrusion.

11. Dispositif de stockage de marchandises, ou contenant, muni d'une porte d'accès (42) permettant la mise en oeuvre du procédé de chargement selon les revendications 1 à 5 et de déchargement selon les revendications 6 à 10, **caractérisé en ce qu'**il comprend une unité d'interaction (46) avec un centre de commande à distance, ladite unité d'interaction (46) étant apte à communiquer des informations au centre à distance et à recevoir des ordres du centre à distance, et **en ce qu'**il comprend un module de mesure et de contrôle de poids (64) des marchandises et des moyens de connexion du module de mesure et de contrôle de poids à l'unité interactive (46).

12. Dispositif de stockage de marchandises selon la revendication précédente, **caractérisé en ce qu'**il comprend des moyens de contrôle d'accès (44) de la porte (42) et des moyens de commande ou codes desdits moyens de contrôle (44), lesdits codes étant fournis ou vérifiés par le centre de commande à distance.

13. Dispositif de stockage de marchandises ou contenant selon l'une des revendications 11 ou 12, **caractérisé en ce qu'**il comprend des moyens de sécurisation (48) aptes à occuper un premier état activé et un second état désactivé, et à détecter une anomalie dans l'état activé, et des moyens d'activation et de désactivation des moyens de sécurisation (48) pilotés par l'unité interactive et **en ce que** l'unité interactive (46) émet un signal d'alerte en cas de détection d'une anomalie par les moyens de sécurisation (48), lesdits moyens de sécurisation (48) comprenant au moins un module de localisation géographique (50) dudit dispositif de stockage (12) et/ou un module anti-intrusion (52) et/ou un module de détection de présence (54) et/ou un module de détection (56) de l'état ouvert ou fermé de la porte (42).

14. Dispositif de stockage de marchandises ou contenant selon l'une quelconque des revendications 11 à 13, **caractérisé en ce qu'**il comprend un sas d'entrée (58) et une unité de stockage (60) destinée à contenir lesdites marchandises, le sas d'entrée (58) comprenant un système de vidéosurveillance (61) connecté à l'unité interactive (46).
